# EUROPÄISCHE PATENTSCHRIFT

(11) **EP 3 851 260 B1**
(45) Veröffentlichungstag und Bekanntmachung des Hinweises auf die Patenterteilung: **07.08.2024**
(21) Anmeldenummer: 21159074.0
(22) Anmeldetag: 30.01.2018
(51) Int. Cl.: B26D 7/06, A47J 43/18, B25J 15/06, B25J 11/00, B26D 7/01

(54) **GREIFER FÜR SCHNEIDVORRICHTUNG**
GRIPPER FOR SLICING DEVICE
PRÉHENSEUR POUR DISPOSITIF DE COUPE

(30) Priorität: 07.02.2017 DE 102017102385
(43) Veröffentlichungstag der Anmeldung: 21.07.2021
(62) Teilanmeldung aus: 18154048.5
(73) Patentinhaber: Weber Food Technology GmbH, 35236 Breidenbach (DE)
(72) Erfinder: Baumeister, Christian, 57555 Mudersbach-Birken (DE); Jung-Sassmannshausen, Fabian, 35080 Bad Endbach (DE); Kahl, Philip, 35066 Frankenberg (DE); Knauf, Michael, 35287 Amöneburg (DE); Kuhmichel, Christoph, 57334 Bad Laasphe (DE); Runkel, Andreas, 35216 Biedenkopf (DE); Schneider, Thorsten, 35096 Weimar (DE)
(74) Vertreter: Manitz Finsterwald Patent- und Rechtsanwaltspartnerschaft mbB

(56) Entgegenhaltungen:
- EP-A1- 2 842 702
- WO-A1-2012/041491
- DE-A1- 10 024 913

## Beschreibung

Die vorliegende Erfindung betrifft einen Greifer zum Ergreifen eines Produkts, insbesondere eines Lebensmittelprodukts. Insbesondere dient der Greifer als Produkthalter.

Solche Greifer kommen beispielsweise in der Lebensmitteltechnik im Zuführungsbereich von Hochleistungsschneidemaschinen zum Einsatz, wenn es darum geht, ein Lebensmittelprodukt in Scheiben zu schneiden. Dabei kommen rotierende Kreis- und Sichelmesser, welche mit einer Schneidkante als Abschluss des Zuführungsbereichs korrespondieren, zum Einsatz. Das Lebensmittelprodukt wird dabei in der Regel in eine Vorschubeinrichtung eingelegt, die es ermöglicht, das Produkt in wohldefinierter Weise einer Schneidebene zuzuführen. Zusätzlich wird ein Endabschnitt des Produkts von dem Greifer erfasst und zuverlässig gehalten. Während dem Schneideprozess wird das Produkt im Wesentlichen durch die Vorschubeinrichtung zu der Schneidebene hin transportiert. Je näher allerdings die Schnittebene dem Endabschnitt des Lebensmittels kommt, desto schwieriger wird es, den Vorschub des Produkts und dessen lagegenaue Fixierung alleine durch die Vorschubeinrichtung zu gewährleisten. Auf das zu schneidende Produkt wirken bei dem Schneidprozess nämlich nicht unerhebliche Querkräfte, die es sicher zu kompensieren gilt. Diese Querkräfte hängen vor allem vom Widerstand des Produkts gegen das Eindringen des Schneidmessers ab.

Üblicherweise kommt ein Transportband zum Einsatz, das einen zuverlässigen Vorschub des Produkts und dessen Fixierung insbesondere dann sicherstellt, wenn die auf dem Band aufliegende Fläche des Produkts möglichst groß ist. Zum Ende des Schneidprozesses hin wird diese Fläche immer kleiner, so dass die Fixierung des Produkts durch den Greifer immer wichtiger wird. Er muss zum einen gewährleisten, dass das Produkt zuverlässig zu der Schneidebene hin transportiert wird. Zum anderen muss er dafür sorgen, dass das Produkt sicher gehalten und - je nach Anwendung - auch zur Portionserstellung mit kurzen Schneidunterbrechungen zurückgezogen wird.

Grundsätzlich ist es bekannt, ein Produkt mittels eines Sauggreifers zu erfassen. Herkömmliche Sauggreifer sind jedoch häufig nicht in der Lage, das Produkt insbesondere zum Ende des Schneidprozesses hin hinreichend zuverlässig zu halten. Zudem soll ein unkontrolliertes Ausreißen des Endabschnittes vermieden werden. Dies führt dazu, dass vergleichsweise große Endabschnitte des Produkts nicht geschnitten werden können und diese zu kostentreibenden Ausschuss werden. Ein Beispiel davon ist aus der WO-2012041491 bekannt. Diese Schrift offenbart einen Greifer zum Ergreifen eines Lebensmittelprodukts, mit einer Ansaugeinrichtung, die eine Anlagefläche mit Ansaugöffnungen aufweist, die mit einem Endabschnitt des Produkts in Kontakt bringbar ist, wobei die Anlagefläche in radialer Richtung von einer Dichteinrichtung begrenzt ist. Eine Membran steht in Verbindung mit einer Pumpeinrichtung und durch ihre Deformation erzeugt einen Unterdruck. Die Anlagefläche weist Formschlussmittel, wie beispielsweise Nadeln auf.

Bekannt sind auch mechanische Greifer, die mittels in das Produkt eindringender Krallen für eine Fixierung des Produkts sorgen. Um eine ausreichend gute Fixierung zu gewährleisten, müssen diese jedoch vergleichsweise tief in das Produkt eindringen. Dies wiederum bedeutet, dass hier ebenfalls ein vergleichsweise gro-βer Endabschnitt des Produkts nicht geschnitten werden kann, was einen entsprechend großen Ausschuss zur Folge hat. Auch weil die Krallen ihre Spuren im Endabschnitt hinterlassen, ist eine Verwertung des Endabschnitts nur eingeschränkt möglich.

Vorstehend wurde ein mögliches Einsatzgebiet eines Greifers rein beispielhaft beschrieben. Es versteht sich jedoch, dass vergleichbare Probleme auch in anderen Bereichen auftreten.

Es ist daher eine Aufgabe der vorliegenden Erfindung, einen Greifer zu schaffen, mit dem ein Produkt sicher gehalten werden kann, ohne dass ein tiefer mechanischer Eingriff in das Produkt erforderlich ist.

Die vorstehend beschriebene Aufgabe wird durch einen Greifer gemäß Anspruch 1 gelöst.

Der Dichtabschnitt sorgt - zusätzlich zu der Dichteinrichtung - somit für eine zuverlässige Abdichtung des Saugabschnitts gegenüber dem Außenraum, sodass die dort - beispielsweise in einem entsprechenden Saugraum - bereitgestellte Saugleistung einen das Produkt zuverlässig fixierenden Unterdruck erzeugt. Die Dichteinrichtung des ersten Saugabschnitts kann auch ein Teil der Anlagefläche sein. Als Pumpeinrichtung kommt grundsätzlich jede Art von Vakuumpumpe in Betracht. Insbesondere in der Lebensmitteltechnik erweist sich jedoch die Verwendung von Strahlpumpen (auch als Injektoren bezeichnet) als vorteilhaft. Grundsätzlich ist es denkbar, einen Greifer mit einer eine Anlagefläche aufweisenden Ansaugeinrichtung auszustatten, die mit einem Abschnitt, insbesondere Endabschnitt des Produkts in Kontakt bringbar ist, wobei die Ansaugeinrichtung zumindest einen ersten Saugabschnitt aufweist, der in radialer Richtung von einer Dichteinrichtung begrenzt ist und der mit einer Unterdruck erzeugenden Pumpeinrichtung in Verbindung steht, wobei die Form des ersten Saugabschnitts - insbesondere auch die Form der Dichteinrichtung des ersten Saugabschnitts - zumindest abschnittsweise an eine Form der Oberfläche des Abschnitts des Produkts anpassbar ist.

Durch die Anpassbarkeit des ersten Saugabschnitts kann sich dieser an die Produktkontur anschmiegen, was sich positiv auf die Dichtigkeit der in Kontakt mit dem Produkt stehenden Teile der Ansaugeinrichtung auswirkt. Dies wiederum sorgt letztlich für eine verbesserte Fixierung des Produkts.

Zu diesem Zweck kann die Ansaugeinrichtung zumindest abschnittsweise aus einem elastischen Material bestehen. Alternativ oder zusätzlich ist es denkbar, die Ansaugeinrichtung derart auszugestalten, dass sie einen Abschnitt mit modifizierbarer Steifigkeit aufweist. Dieser elastische und/oder in seiner Steifigkeit modifizierbare Abschnitt kann großflächig ausgebildet oder auch nur lokal vorgesehen sein. Beispielsweise ist er in Bereichen vorgesehen, die zwischen dem Saugabschnitt und dem Außenraum angeordnet sind, um so als Dichteinrichtung zu fungieren und/oder diese zu ergänzen. Eine modifizierbare Steifigkeit kann durch elektro-/magnetorheologische Einheiten bereitgestellt werden. Es ist auch denkbar, Elemente vorzusehen, die flüssigkeitshaltig sind und die dann verreist werden. Der Greifer wird bei einer entsprechenden Ausgestaltung gegen den Endabschnitt des Produkts gedrückt und passt sich dabei (lokal) an dessen Form an. Anschließend wird die Form des Saugabschnitts fixiert, in den vorgenannten Beispielen etwa durch das Anlegen eines elektrischen/magnetischen Feldes bzw. durch eine Kühlung.

Grundsätzlich ist es auch denkbar, einen Greifer bereitzustellen, der eine eine Anlagefläche aufweisende Ansaugeinrichtung umfasst, wobei die Ansaugeinrichtung zumindest einen ersten Saugabschnitt aufweist, der in radialer Richtung von einer Dichteinrichtung begrenzt ist und der mit einer Unterdruck erzeugenden Pumpeinrichtung in Verbindung steht. Die Ansaugeinrichtung ist zumindest in einer Ebene der Anlagefläche aktiv oder passiv seitlich beweglich angeordnet. Es ist auch denkbar, dass die Ansaugeinrichtung mehrere Abschnitte aufweist, die zumindest in einer Ebene der Anlagefläche aktiv oder passiv seitlich beweglich angeordnet sind. Diese Abschnitte sind gemäß einer Ausführungsform separat voneinander beweglich angeordnet.

Bei diesem Greifer werden auf das Produkt und damit letztlich auf die Dichteinrichtung wirkende Querkräfte, die z.B. beim Eindringen des Schneidmessers in das Produkt auftreten, kompensiert, indem ein relativ geringfügiges seitliches Ausweichen des Greifers oder Abschnitten des Greifers zugelassen wird. Die beim Schneiden auftretenden Erschütterungen belasten dann die Dichteinrichtung weniger, wodurch die Effizienz der Ansaugeinrichtung und damit die Zuverlässigkeit der Fixierung des Produkts erhöht werden. Insbesondere ist die Ansaugeinrichtung mittels einer Auslenkanordnung beweglich angeordnet, die eine Fixiereinheit umfasst, mit der die seitliche Beweglichkeit der Ansaugeinrichtung selektiv beeinflussbar oder steuerbar ist, insbesondere wobei die Fixiereinheit derart ausgestaltet ist, dass verschiedene Abschnitte der Ansaugeinrichtung selektiv beeinflussbar oder ansteuerbar sind, um eine unterschiedliche seitliche Beweglichkeit verschiedener Abschnitte der Ansaugeinrichtung zu ermöglichen.

Es versteht sich, dass die Amplitude der Bewegung des Greifers durch geeignete Anschläge und/oder "bremsende" oder dissipative Komponenten begrenzbar und/oder beeinflussbar sein können. Denkbar ist beispielsweise die Verwendung von elektro-/magnetorheologischen Elementen, mechanischen "Bremsen" oder Ähnlichem. Die Komponenten können auch so ausgestaltet sein, dass sie bei Bedarf auch für eine vollständige Fixierung des Greifers bezüglich einer seitlichen Auslenkbewegung sorgen. Die seitliche Beweglichkeit des Greifers kann beispielsweise durch elastische und/oder gelenkige Einrichtungen bereitgestellt werden.

Ferner ist es möglich, einen Greifer zu schaffen, der eine eine Anlagefläche aufweisende Ansaugeinrichtung aufweist, die mit einem Abschnitt, insbesondere Endabschnitt des Produkts in Kontakt bringbar ist, wobei die Ansaugeinrichtung zumindest einen ersten Saugabschnitt aufweist, der in radialer Richtung von einer Dichteinrichtung begrenzt ist und der mit einer Unterdruck erzeugenden Pumpeinrichtung in Verbindung steht. Es ist eine Kühleinrichtung vorgesehen, mit der die Ansaugeinrichtung und/oder das Produkt zumindest abschnittsweise kühlbar sind, insbesondere direkt oder indirekt mittels eines Kühlmittels.

Mit anderen Worten wird das Produkt nicht nur durch die Ansaugeinrichtung fixiert, sondern es ist eine unterstützende Fixierung durch eine zumindest abschnittsweise Vereisung vorgesehen. Die Vereisung stellt eine zusätzlich fixierende Verbindung zwischen dem Produkt und der Ansaugeinrichtung her.

Grundsätzlich ist es denkbar, eine zumindest lokale Kühlung der Ansaugeinrichtung bzw. des Produkts durch ein Peltier-Element zu erzeugen. Die Verwendung eines Kühlmittels ist jedoch in vielen Fällen vorzuziehen. Dieses kann beispielsweise durch geeignete Kühlmittelkanäle in dem Greifer an die gewünschten Stellen transportiert werden. Als Kühlmittel kommen beispielsweise flüssiger Stickstoff, Sole oder unterkühlte Druckluft in Betracht.

Die Kühleinrichtung kann derart ausgestaltet sein, dass die Ansaugeinrichtung in einem Bereich kühlbar ist, der sich in radialer Richtung zumindest abschnittsweise, insbesondere vollständig um den ersten Saugabschnitt erstreckt. Die erzeugte Vereisung umgibt somit den ersten Saugabschnitt zumindest teilweise und unterstützt damit dessen Abdichtung gegenüber dem Außenraum. Außerdem wird dadurch eine praktisch automatische Anpassung an Unregelmäßigkeiten der Produktoberfläche erreicht. Die Abkühlung oder gar Vereisung des Produkts erhöht zudem dessen Festigkeit und führt gegebenenfalls zum Verschließen von Porenräumen, die Leckageströme verursachen können. Im Gegensatz zu mechanischen Greifhaken wird darüber hinaus das Produkt nicht geschädigt. Eine Erhöhung der Produktfestigkeit durch die Vereisung kann das Schneiden des Produkts vereinfachen und/oder einem "Ausreißen" von mechanisch in das Produkt eingreifenden Greifvorrichtungen (siehe unten) entgegenwirken.

Die Kühleinrichtung kann ferner derart ausgestaltet sein, dass das Kühlmittel in den ersten Saugabschnitt injizierbar ist, um die relevanten Oberflächen des Produkts und des Greifers schnell zu kühlen. Ein Evakuieren des Saugabschnitts und ein Einbringen des Kühlmittels in einem oder mehreren Zyklen steigert die Effizienz der Kühlung. Alternativ oder zusätzlich kann die Kühleinrichtung auch derart ausgestaltet sein, dass Wasser in den ersten Saugabschnitt injizierbar ist. Beispielsweise wird zunächst Wasser (oder ein Wasser-Luft-Gemisch) in einen Saugraum oder mehrere Saugräume der Ansaugeinrichtung eingespritzt. Dann werden dem Produkt zugewandte Oberflächen des Greifers gekühlt, wodurch das Wasser gefriert und eine fixierende Vereisung entsteht. Zum Abwerfen des Endstücks kann der Greifer (lokal) erwärmt werden. Es ist auch vorstellbar, erst nach ein- oder mehrmaligem Einbringen des Kühlmittels - beispielsweise Stickstoff oder unterkühlte Druckluft, die etwa mit einem Ranque-Hilsch-Wirbelrohr direkt am Greifer erzeugt wird - Wasser einzubringen, wobei dazu der von der Pumpeinrichtung erzeugbar Unterdruck genutzt wird, um eine bessere Verteilung des Wassers und damit eine gleichmäßigere Vereisung zu erreichen.

Gemäß einer vorteilhaften Ausführungsform umfasst der Dichtabschnitt zumindest einen zweiten Saugabschnitt, der in radialer Richtung von einer zweiten Dichteinrichtung begrenzt ist und der mit der Unterdruck erzeugenden Pumpeinrichtung in Verbindung steht. Der zweite Saugabschnitt bildet somit eine - in radialer Richtung gesehen - den ersten Saugabschnitt nach außen hin zumindest teilweise abschirmende Funktionskomponente, die eine zusätzlich fixierende und abdichtende Wirkung entwickelt. Der entsprechende Dichtabschnitt kann ebenfalls kühlbar sein, insbesondere kann es vorgesehen sein, dass in den zweiten Saugabschnitt Kühlmittel und/oder Wasser injizierbar ist.

Die erste und/oder die zweite Dichteinrichtung können zumindest abschnittsweise als Schneide ausgestaltet sein. Eine solche Schneide dringt bei einem Ergreifen des Produkts durch den Greifer in dieses ein und verformt es lokal plastisch.

Es ist auch möglich, die erste und/oder die zweite Dichteinrichtung zumindest abschnittsweise als Wulst oder Dichtlippe auszubilden. Durch einen Wulst wird die Oberfläche des Produkts im Wesentlichen nur elastisch verformt und auch geringfügig verdichtet. Eine Dichtlippe liegt bei nur unwesentlicher Verformung des Produkts auf diesem dicht auf.

Die Wahl der geeigneten Dichteinrichtung hängt unter anderem von den Eigenschaften des zu ergreifenden Produkts ab. Bei Bedarf können auch verschiedenartig ausgestalteten Dichteinrichtungen bei einem Greifer beliebig kombiniert werden, um den jeweils vorliegenden Anforderungen Rechnung zu tragen.

Eine zusätzliche Verbesserung der Dichtwirkung der Dichteinrichtungen kann erzielt werden, wenn diese mit der Pumpeinrichtung in Verbindung stehende Ansaugöffnungen aufweisen. Dann können diese mittels Unterdruck zuverlässig gegen die Produktoberfläche gepresst werden.

Gemäß einer weiteren Ausführungsform sind die erste und/oder die zweite Dichteinrichtung derart geformt, dass eine lokale Kompression des mit der Dichteinrichtung in Kontakt bringbaren Produkts erzeugbar ist. Insbesondere sind die erste und/oder die zweite Dichteinrichtung zumindest abschnittsweise keilförmig ausgebildet. Besonders effizient ist es, wenn zwei einander gegenüber liegende Schrägen vorgesehen sind, die in einer Richtung zu dem Produkt hin divergieren. Bei einem Ergreifen des Produkts wird dieses durch die V-förmige Gestaltung des zwischen den Schrägen liegenden Raums komprimiert, was zum Verschließen von möglicherweise vorhandenen Poren in dem Produkt und zu einer guten Haftung führt. Mit anderen Worten wird die Anlagekraft und damit die Dichtwirkung zwischen Produkt und Anlageschräge erhöht.

Der erste Saugabschnitt ist durch zumindest einen Wandabschnitt in zumindest zwei Segmente aufgeteilt. Eine dem Produkt zugewandte Oberfläche des entsprechenden Wandabschnitts bildet einen Teil der Anlagefläche. Auf der Oberfläche können bei Bedarf Dichteinrichtungen, Krallen, Stifte, Spitzen, Schneiden, Wülste, Dichtlippen oder ähnliches vorgesehen sein, um die Fixierung weiter zu verbessern. Vorstehendes gilt auch für den Dichtabschnitt, so er vorgesehen ist.

Die Anlagefläche - ungeachtet dessen, ob sie im Bereich des Saug- oder Dichtabschnitts, zwischen diesen Abschnitten oder in radialer Richtung außerhalb der genannten Abschnitte liegt - kann zumindest eine Ansaugöffnung aufweisen, um eine möglichst feste und vorzugsweise dichte Anlage des Produkts an der Anlagefläche zu erzielen.

Gemäß einer weiteren Ausführungsform sind mehrere erste Saugabschnitte und/oder mehrere Dichtabschnitte - eventuell mit jeweils einem oder mehreren zweiten Saugabschnitten - vorgesehen. Beispielsweise sind diese jeweils durch nur eine Dichteinrichtung voneinander getrennt. Zusätzlich oder alternativ ist es aber durchaus denkbar, auch eine räumliche Beabstandung der genannten Abschnitte vorzusehen.

Es ist in vielen Fällen vorteilhaft, die Abschnitte in einer Draufsicht auf die Ansaugeinrichtung (von dem zu ergreifenden Produkt aus gesehen) unsymmetrisch zu formen und/oder zu verteilen. Dadurch kann berücksichtigt werden, dass auf das Produkt von verschiedenen Seiten aus unterschiedlich große Querkräfte wirken können, die es zu kompensieren gilt. Beispielsweise treten bei einem zu schneidenden Produkt erhebliche Querkräfte auf, wenn das Schneidmesser in das Produkt eindringt. Auf der Seite des Greifers, die der Eintrittsseite des Schneidmessers zugewandt ist, können daher mehr und/oder besonders geformte Saug- und/oder Dichtabschnitte vorgesehen sein, um hier bei Bedarf größere Haltekräfte bereitstellen zu können. Dies gilt im Übrigen auch für andere Mittel zum Fixieren des Produkts an dem Greifer (z.B. Kühleinrichtung, siehe oben, und/oder mechanische, in das Produkt eingreifende Greifvorrichtungen, siehe unten).

Bei bestimmten Produkten und/oder besonders hohen Anforderungen an die aufzubringenden Haltekräfte kann der Greifer eine selektiv aktuierbare Greifvorrichtung umfassen, die zumindest ein Greifelement aufweist, das derart angeordnet ist, dass es bei einem Kontakt des Greifers mit dem Produkt im Bereich der Anlagefläche und/oder in einem Bereich um die Anlagefläche in das Produkt eindringen kann. Eine entsprechende Aktuierungsvorrichtung kann mechanisch, pneumatisch, hydraulisch oder elektrisch betreibbar sein.

Insbesondere ist das Greifelement derart angeordnet, dass es bei einem Kontakt des Greifers mit dem Produkt im Bereich des ersten Saugabschnitts in das Produkt eingreifen kann. Eine weitere Ausführungsform des Greifelements sieht vor, dass es derart angeordnet ist, dass es bei einem Kontakt des Greifers mit dem Produkt in einen Randbereich des Produkts eingreifen kann. Insbesondere kann der Eingriff in einer Richtung schräg zu dem Rand des Produkts hin vorgesehen sein. Wenn von diesem Rand des Produkts besonders große Querkräfte auf das Produkt wirken - beispielsweise bei einem Eindringen eines Schneidmessers -, wird es gegen das Greifelement gedrückt. Dies wirkt sich unterstützend auf die Fixierung aus.

Gemäß einer Ausführungsform der Pumpeinrichtung umfasst diese mehrere separate Pumpeinheiten. Dies ist insbesondere dann vorteilhaft, wenn mehrere Saugabschnitte vorhanden sind, die individuell und bedarfsgerecht mit Unterdruck beaufschlagt werden sollen. Dabei ist es beispielsweise durchaus möglich, einige Saugabschnitte mit einer Pumpeinheit koppeln und andere Saugabschnitte mit einer anderen Einheit zu verbinden. Eine separate Unterdruckbeaufschlagung kann auch durch geeignete Mittel zur Einstellung der gewünschten unter Unterdruckniveaus in den einzelnen Abschnitten der Ansaugeinrichtung erzeugt werden. Derartige Mittel sind beispielsweise Ventil- oder Drosseleinrichtungen. Eine Kombination von mehreren Pumpeinheiten und Mitteln zur Druckeinstellung ist ebenfalls möglich.

Die Pumpeinrichtung ist insbesondere derart ausgestaltet, dass sie eine zeitlich variable Unterdruckerzeugung zulässt. Je nach Bedarf wird dann die jeweils benötigte Saugleistung zur Verfügung gestellt. Insbesondere gestattet die Ausgestaltung der Pumpeinrichtung die Bereitstellung unterschiedlicher Unterdruckniveaus in verschiedenen Abschnitten der Ansaugeinrichtung, was vorstehend bereits erwähnt wurde.

Gemäß einer weiteren Ausführungsform sind der erste Saugabschnitt und der Dichtabschnitt separate Einheiten. Insbesondere sind separate Abschnitte aktiv oder passiv relativ zueinander bewegbar angeordnet. Falls mehrere Saug-/Dichtabschnitte vorhanden sind, können diese beliebig zu separaten Einheiten gruppiert sein.

Die vorliegende Erfindung betrifft ferner eine Schneidvorrichtung zum Schneiden eines Produkts, insbesondere eines Lebensmittelprodukts. Die Schneidvorrichtung umfasst eine Vorschubvorrichtung - beispielsweise ein Transportband - zum Vorschub des Produkts in einer Richtung im Wesentlichen senkrecht zu einer durch ein Schneidmesser und eine Schneidkante definierten Schneidebene und einen Greifer gemäß zumindest einer der vorstehend beschriebenen Ausführungsformen. Insbesondere weist der Greifer auf einer Seite, die einer Schneidmessereintrittsseite des Produkts zugewandt ist, zusätzlich zu der Ansaugeinrichtung zumindest ein Fixiermittel auf, um das Produkt an dieser Seite zusätzlich zu fixieren. Wie vorstehend bereits mehrfach beschrieben wurde, treten an dieser Seite des Produkts besonders große Querkräfte auf, wenn das Schneidmesser in das Produkt eindringt. Das zusätzliche Fixiermittel trägt dem Rechnung. Geeignete Fixiermittel sind beispielsweise entsprechende Saugabschnitte, mechanisch in das Produkt eingreifende Greifvorrichtungen, eine Vereisung bewirkende Kühleinrichtungen oder Ähnliches.

Nachfolgend wird ein Verfahren zum Schneiden eines Produkts angegeben, bei dem kleinere, nicht mehr schneidbare Produktendabschnitte anfallen.

Bei dem Verfahren kommt eine Schneidvorrichtung zum Einsatz, die eine Produktaufnahme zur Aufnahme des Produkts, eine Vorschubvorrichtung zum Vorschub des Produkts in einer Richtung im Wesentlichen senkrecht zu einer durch ein Schneidmesser und eine Schneidkante definierten Schneidebene und einen Greifer mit einer Saugeinrichtung zum Ergreifen eines Endabschnitts des Produkts umfasst. Insbesondere finden bei dem Verfahren eine Schneidvorrichtung der vorstehend beschriebenen Art und/oder ein Greifer gemäß einer der vorstehend beschriebenen Ausführungsformen Verwendung.

Durch die Saugeinrichtung kann ein zeitlich variabler und/oder lokal unterschiedlicher Unterdruck erzeugt werden. D.h. durch die Saugeinrichtung wird eine zeitlich bedarfsgerecht veränderliche und/oder räumlich angepasste Saugleistung zur Verfügung gestellt.

Insbesondere weist die Saugeinrichtung mehrere separate Saugabschnitte auf, in denen unabhängig voneinander ein jeweils angepasster Unterdruck hergestellt wird. Zwei oder mehrere Saugabschnitte können auch drucktechnisch mit einander gekoppelt sein. Nicht miteinander kommunizierende Saugabschnitte bringen den Vorteil, dass sich Leckagen im Bereich eines Saugabschnitts nicht nachteilig auf die fixierende Wirkung des oder der anderen Saugabschnitte auswirken. Mit anderen Worten: Falls in einem Saugabschnitt Nebenluft - sei es beispielsweise aufgrund besonders großer Poren in dem Produkt und/oder aufgrund ungenügender Abdichtung - gezogen wird, beeinträchtigt dies nicht die Saugwirkungen der anderen Saugabschnitte.

Gemäß einer Variante des Verfahrens wird ein in einem zentralen Bereich der Saugeinrichtung angeordneter Saugabschnitt (oder mehrere dort angeordnete Saugabschnitte) zumindest zeitweise mit einem größeren Unterdruck beaufschlagt, als ein Saugabschnitt oder mehrere Saugabschnitte, die in radialer Richtung gesehen außerhalb des zentralen Bereichs angeordnet sind. Vorteilhaft ist dies, weil im zentralen Bereich eine vergleichsweise gut für das Ankoppeln geeignete Produktoberfläche zu erwarten ist, beispielsweise eine im Wesentlichen ebene Fläche.

Insbesondere wird zumindest ein Saugabschnitt, der an einer einer Schneidmessereintrittsseite des Produkts zugewandten Seite des Greifers angeordnet ist, zumindest zeitweise mit einem größeren Unterdruck beaufschlagt, als ein Saugabschnitt (oder Saugabschnitte), der an einer der Schneidmessereintrittsseite des Produkts abgewandten Seite des Greifers angeordnet ist. Dadurch werden die beim Schneiden hier besonders großen Querkräfte "aufgefangen". Dies ist insbesondere in einer Endphase des Schneidprozesses von großer Bedeutung, da die Produktfixierung durch die Vorschubeinrichtung (oftmals ein Transportband) aufgrund der geringen Auflagefläche des Produkts begrenzt ist.

Gemäß einer weiteren Variante des Verfahrens wird zu Beginn eines Greifvorgangs zum Ergreifen des Produkts eine erste Saugleistung bereitgestellt, um das Produkt sicher zu greifen. Während des sich daran anschließenden Schneidprozesses des Produkts wird eine zweite Saugleistung bereitgestellt, die kleiner ist als die erste Saugleistung. Mit anderen Worten wird zur Sicherstellung einer zuverlässigen Fixierung zunächst ein starkes Ansaugen des Produkts bewirkt. Während dem Aufschneiden des Produkts, das dann noch sicher auf der Vorschubvorrichtung fixiert ist, wird die Saugleistung reduziert. Dies geschieht insbesondere, um Energie zu sparen, aber auch um ein elastisches Produkt beispielsweise nicht durch übermäßige Saugkräfte zu stark zu belasten, so dass dann in der Endphase des Schneidprozesses eventuell die Haltekraft nachlässt. Zu dem Produktende hin, d.h. in einer Endphase des Schneidprozesses, kann die Saugleistung wieder erhöht werden, um die nachlassende Fixierung durch die Vorschubvorrichtung zu kompensieren. Dies ermöglicht es, auch einen Endabschnitt des Produkts noch zuverlässig präzise schneiden zu können. Die Regelung des jeweils erforderlichen Unterdrucks bzw. der entsprechenden Saugleistung kann stufenlos oder in diskreten Stufen erfolgen.

Zur Erhöhung der Prozesssicherheit können die Saugleistung und/oder ein in der Saugeinrichtung herrschender Unterdruck überwacht werden, um Leckageströme durch das Produkt und/oder eine Dichteinrichtung der Saugeinrichtung zu erfassen. Die Saugleistung kann in Reaktion auf ein Erkennen von Leckageströmen - vorzugsweise lokal - angepasst werden. Die vorstehend beschriebene Überwachung ermöglicht es insbesondere, bei einer Ausgestaltung der Saugeinrichtung mit mehreren Saugabschnitten lokal auftretende Leckagen zu kompensieren, d.h. die Saugleistung in von einer Leckage betroffenen Saugabschnitten und/oder die Saugleistung in den anderen Saugabschnitten zu erhöhen. Falls erkannt wird, dass eine Erhöhung der Saugleistung in einem von Leckage betroffenen Saugabschnitt keine Verbesserung der Situation bewirkt, kann die Saugleistung dort auch auf null reduziert werden, um Energie zu sparen. Dies sollte nur dann erfolgen, wenn sichergestellt ist, dass das Produkt trotzdem noch sicher gehalten wird. Anderenfalls kann auch eine Warnung ausgegeben werden und/oder gar eine Sicherheitsabschaltung erfolgen.

Zur Verbesserung der Fixierung des Produkts an dem Greifer kann eine Kühleinrichtung vorgesehen sein, mit der der Greifer - insbesondere im Bereich der Saugeinrichtung und/oder in einem benachbarten Bereich - zumindest abschnittsweise gekühlt wird, um eine Vereisung zwischen dem Produkt und dem Greifer herzustellen. Zu diesem Zweck können ein Kühlmittel und/oder Wasser in einen Saugraum der Saugeinrichtung eingebracht werden. Insbesondere werden das Kühlmittel und das Wasser nacheinander in den Saugraum der Saugeinrichtung eingebracht. Eine mögliche Vorgehensweise sieht vor, den Saugraum bzw. die Saugeinrichtung zunächst einmal oder mehrfach mit Kühlmittel zu fluten und anschließend Wasser einzubringen, das aufgrund der Vorkühlung dann sehr schnell gefriert. Bei Bedarf kann auch umgekehrt vorgegangen werden. Eine Evakuierung des Saugraums in Verbindung mit einem Einbringen von Wasser (in beliebiger Reihenfolge oder zeitgleich) unterstützt dessen Verteilung und Vereisung.

Eine verbesserte Fixierung des Produkts wird auch durch eine selektiv betätigbare Greifvorrichtung erzielt, die in mechanischen Eingriff mit dem Endabschnitt des Produkts gebracht wird.

Um beim Schneidprozess auftretende Vibrationen zu kompensieren, kann der Greifer in einer Ebene der Anlagefläche seitlich beweglich angeordnet sein. Die Beweglichkeit des Greifers kann zeitlich variiert werden. D.h. die seitliche Beweglichkeit des Greifers kann an die jeweils vorliegenden Bedingungen angepasst werden. Sie kann auch ganz unterbunden werden, falls dies erforderlich ist. Vorteilhafterweise umfasst der Greifer separat voneinander bewegliche Abschnitte, insbesondere wobei die Beweglichkeit der Abschnitte unabhängig voneinander variiert wird.

Die jeweiligen Charakteristika der verschiedenen Ausführungsformen des erfindungsgemäßen Greifers und die der beispielhaft beschriebenen Greifer können bei Bedarf miteinander kombiniert werden, um einen für das jeweils vorliegende Anforderungsprofil, im Wesentlichen bestimmt durch Produkt- und Maschinenparameter, geeigneten Greifer zu schaffen. Entsprechendes gilt für das vorstehend angegebene Verfahren zum Schneiden eines Produkts.

Weitere Ausführungsformen der vorliegenden Erfindung sind in den Ansprüchen, der Beschreibung und den beigefügten Zeichnungen angegeben.

Nachfolgend wird die vorliegende Erfindung rein beispielhaft teilweise nicht erfindungsgemässe Beispiele vorteilhafter Ausführungsformen unter Bezugnahme auf die Zeichnungen erläutert. Es zeigen:
- Fig.1: ein erstes Beispiel eines Greifers in einer Schnittansicht,
- Fig. 2: das Beispiel des Greifers in einer Vorderansicht,
- Fig. 3: ein zweites Beispiel eines Greifers in einer Schnittansicht,
- Fig. 4: ein drittes Beispiel eines Greifers in einer Schnittansicht,
- Fig. 5: eine Ausführungsform der Pumpeinrichtung,
- Fig. 6: eine Ausführungsform des erfindungsgemäßen Greifers in einer Vorderansicht,
- Fig. 7: ein viertes Beispiel eines Greifers in einer Schnittansicht,
- Fig. 8: ein fünftes Beispiel eines Greifers in einer Schnittansicht,
- Fig. 9: ein sechstes Beispiel eines Greifers in einer Schnittansicht,
- Fig. 10: ein siebtes Beispiel eines Greifers in einer Vorderansicht,
- Fig. 11 und 12: ein achtes Beispiel eines Greifers in einer Schnittansicht in verschiedenen Zuständen,
- Fig. 13: ein neuntes Beispiel eines Greifers in einer Schnittansicht,
- Fig. 14: ein zehntes Beispiel eines Greifers in einer Schnittansicht,
- Fig. 15: ein elftes Beispiel eines Greifers in einer Schnittansicht und
- Fig. 16: ein zwölftes Beispiel eines Greifers in einer Schnittansicht.

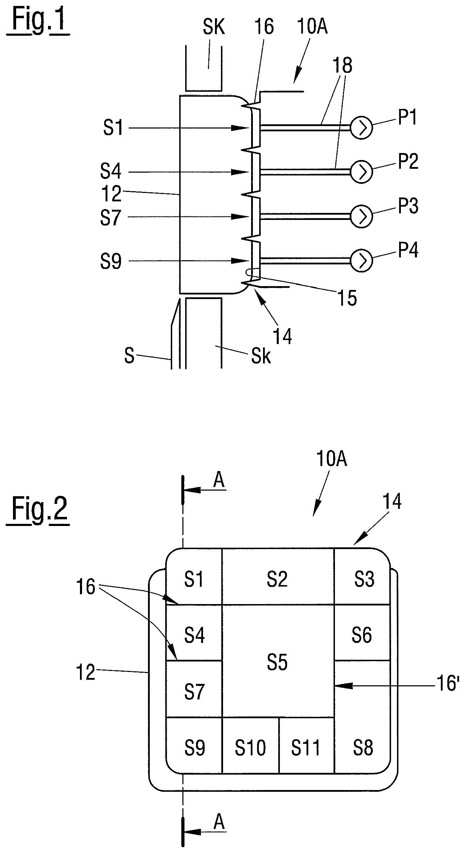

Figur 1 zeigt einen Greifer 10A in einer Schnittansicht. Er ist in Eingriff mit einem Endabschnitt eines Lebensmittelprodukts 12, beispielsweise ein riegelförmiger Käse. Das Produkt 12 wird durch ein Schneidmesser S im Bereich einer Schneidkante SK in Scheiben aufgeschnitten.

Zu Beginn des Schneidprozesses, wenn das Produkt 12 noch großflächig auf einem nicht gezeigten Transportband aufliegt, ist zwar auch bereits der Greifer 10A mit dem Endabschnitt des Produkts 12 gekoppelt. Die fixierende Wirkung des Greifers 10A spielt dabei allerdings noch keine so große Rolle wie in einer Endphase des Schneidprozesses. Dann ist die Auflagefläche des Produkts 12 auf dem Transportband nämlich sehr klein und die beim Eindringen des Schneidmessers S in das Produkt 12 erzeugten Querkräfte müssen durch den Greifer 10A aufgenommen werden, um auch ein präzises Schneiden des Endabschnitts des Produkts 12 zu ermöglichen.

Zum sicheren Greifen des Produkts 12, ohne dass dabei tief mechanisch in das Produkt 12 eingegriffen wird, weist der Greifer 10A eine Ansaugeinrichtung 14 auf, die das Produkt 12 mittels Unterdruck an dem Greifer 10A fixiert.

Eine Vorderansicht der Ansaugeinrichtung 14 (von dem Produkt 12 aus gesehen) ist in Figur 2 zu sehen. In Figur 2 ist auch die Schnittebene A-A der Figur 1 angedeutet. Die Ansaugeinrichtung 14 umfasst eine Mehrzahl separater Saugabschnitte S1 bis S11. Diese sind voneinander durch entsprechende Dichteinrichtungen getrennt. D.h. grundsätzlich kann in jedem Saugabschnitt S1 bis S11 unabhängig von den anderen Saugabschnitten ein gewünschter Unterdruck erzeugt werden, wenn der Greifer 10A an der Rückseite des Produkts 12 anliegt. Beispielsweise wird die den Saugabschnitten S1 bis S11 zur Verfügung gestellte Saugleistung überwacht und bedarfsgerecht geregelt. Auch eine Drucküberwachung im Bereich der einzelnen Saugabschnitte S1 bis S11 ist denkbar.

Durch eine individuelle Unterdruckbeaufschlagung der Saugabschnitte S1 bis S11 können bedarfsgerecht lokal unterschiedliche Haltekräfte erzeugt werden. Falls einer der Saugabschnitte S1 bis S11 Undichtigkeiten aufweist, kann ihm eine grö-βere Saugleistung zugeführt werden und/oder andere Saugabschnitte S1 bis S11 kompensieren den Haltekraftverlust durch eine erhöhte Saugleistungszuteilung. Mit anderen Worten ermöglicht eine Aufteilung der Sauganordnung in mehrere Saugabschnitte S1 bis S11 eine höhere Flexibilität, um auf die jeweils vorliegenden Bedingungen reagieren zu können.

Im vorliegenden Beispiel bilden Bodenabschnitte der Saugabschnitte S1 bis S 11 gleichzeitig eine Anlagefläche 15 für das Produkt 12. D.h. wenn die Saugabschnitte S1 bis S11 mit einem Unterdruck versorgt werden, wird das Produkt 12 gegen die Anlagefläche 15 gepresst. Es kann jedoch vorgesehen sein, dass in den Saugabschnitten S1 bis S11 jeweils Saugräume bildende Vertiefungen vorhanden sind.

Wie in Figur 1 zu sehen ist, sind die Dichteinrichtungen Schneiden 16, die in das Produkt 12 eindringen und so eine in radialer Richtung des jeweiligen Abschnitts S1 bis S11 verlaufende Dichtung bilden. Im vorliegenden Beispiel bildet der Saugabschnitt S5 einen zentralen Bereich der Ansaugeinrichtung 14. Er ist umgeben von den Saugabschnitten S1 bis S4 und S6 bis S11. Anstelle der gezeigten ungleichmäßigen Ausgestaltung und Verteilung der den zentralen Saugabschnitt S5 umgebenden Saugabschnitte kann auch eine symmetrische oder gleichmäßige Saugabschnittkonfiguration vorgesehen sein.

Die Saugabschnitte S1 bis S4 und S6 bis S11 bilden einen Ring um den zentralen Saugabschnitt S5 und schirmen diesen somit gegenüber der Umgebung zusätzlich ab. Letztlich wirken sie wie eine zusätzliche Barriere zum "Schutz" des Saugabschnitts S5 und der von ihm erzeugten Fixierungswirkung. Auch wenn sich Probleme beim Erzeugen eines Unterdrucks in einem oder mehreren der Saugabschnitte S1 bis S4 und S6 bis S11 ergeben sollten, so bedeutet dies nicht, dass dies einen negativen Einfluss auf den Saugabschnitt S5 oder die anderen, den schützenden Rand bildenden Saugabschnitte hat. Die Aufteilung der dem Produkt 12 zugewandten Seite der Ansaugeinrichtung 14 kann an die jeweiligen Anforderungen angepasst werden. Bevorzugt werden insbesondere in Bereichen, die besonders belastet sind, mehrere separate Abschnitte angeordnet. Im vorliegenden Beispiel kann vorgesehen sein, dass während dem Schneidprozess das Schneidmesser S in Figur 2 von links in das Produkt 12 eindringt (abweichend von der in Figur 1 angedeuteten Situation). Dort sind nämlich vier Saugabschnitte S1, S4, S7 und S9 vorgesehen. Die mit dem Schneiden verbundenen Querkräfte können durch diese Saugabschnitte S1, S4, S7 und S9 aufgenommen werden.

Bei dem Greifer 10A "teilen" sich benachbarte Saugabschnitte S1 bis S11 abschnittsweise ihre Dichteinrichtung. Die den Saugabschnitt S5 umgebende Schneide 16' bildet gleichzeitig einen jeweiligen, in radialer Richtung innen liegenden Abschnitt der Dichteinrichtung der den Saugabschnitt S5 umgebenden Saugabschnitte. Natürlich kann auch vorgesehen sein, dass einige der Saugabschnitte S1 bis S11 bzw. jeder Saugabschnitt S1 bis S11 eine "eigene" Dichteinrichtung aufweist, d.h. zwischen den Dichteinrichtungen benachbarter Saugabschnitte S1 bis S11 kann ein Zwischenraum vorgesehen sein, der gegebenenfalls bei einer Anlage des Produkts 12 (teilweise) von diesem gefüllt ist.

Der Unterdruck in den Saugabschnitten S1 bis S11 wird durch geeignete Pumpeinrichtungen P1 bis P4 erzeugt (siehe Figur 1). Die Einrichtungen P1 bis P4 stehen über Saugkanäle 18 mit den zwischen den Schneiden 16 angeordneten Saugabschnitten S1, S4, S7 und S9 in Verbindung. Grundsätzlich können aber auch mehrere Saugabschnitte mit einer gemeinsamen Pumpeinrichtung verbunden sein, was nachstehend noch näher erläutert wird.

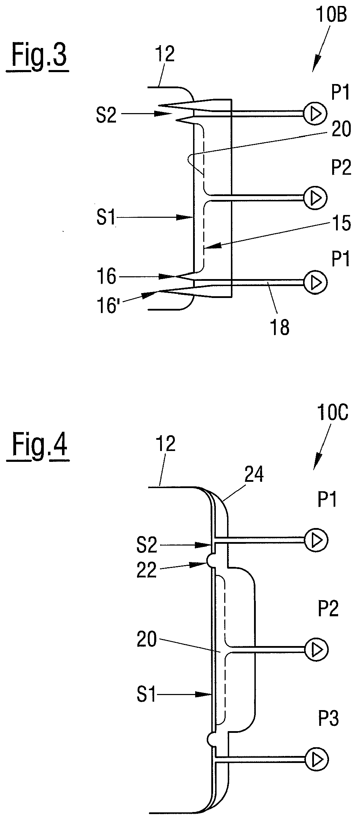

Figur 3 zeigt einen Greifer 10B, der einen zentralen Saugabschnitt S1 aufweist. Der Saugabschnitt S1 umfasst einen Saugraum 20, der über den Saugkanal 18 mit der Pumpeinrichtung P2 in Verbindung steht. In radialer Richtung ist der Saugraum 20 von einer ringförmigen Anlagefläche 15 umgeben. Radial außerhalb der Anlagefläche 15 ist eine in radialer Richtung geschlossene Schneide 16 angeordnet, die bei einem Ergreifen des Produkts 12 in dieses eindringt und damit den Saugabschnitt S1 abdichtet. Der Saugabschnitt S1 ist wiederum umgeben von einem Saugabschnitt S2, der gegenüber der Umgebung nach außen hin durch eine Schneide 16' abgegrenzt ist. Die Schneide 16' greift tiefer in das Produkt 12 ein als die Schneide 16. Der Saugabschnitt S2 steht mit einer Pumpeinrichtung P1 in Verbindung. Grundsätzlich ist es auch möglich, den Saugabschnitt S2 in mehrere Segmente aufzuteilen, die mit unterschiedlichen Pumpeinrichtungen in Verbindung stehen. Der Saugabschnitt S2 bildet eine den Saugabschnitt S1 umgebende Barriere, die unabhängig von dem Saugabschnitt S1 mit Unterdruck beaufschlagbar ist, was sich positiv auf die Greifwirkung des Greifers 10B auswirkt.

Figur 4 zeigt einen Greifer 10C, der ebenfalls wie der Greifer 10B einen ersten Saugabschnitt S1 und einen zweiten Saugabschnitt S2 umfasst. Allerdings sind hier keine Schneiden 16,16' vorgesehen, um die Saugabschnitte S1, S2 dichtend voneinander zu trennen. Zu diesem Zweck ist ein den Saugabschnitt S1 in radialer Richtung umgebender Wulst 22 vorgesehen, der durch den bei Betrieb der Pumpeinrichtung P2 in dem Saugraum 20 herrschenden Unterdruck fest gegen das Produkt 12 gedrückt wird und dieses unter Umständen sogar elastisch verformt. Der Saugabschnitt S2, der im vorliegenden Beispiel segmentiert ist und von zwei separaten Pumpeinrichtungen P1, P3 mit Unterdruck beaufschlagt wird, weist eine elastische Dichtlippe 24 auf, die auf dem Produkt 12 aufliegt. Durch den in dem Saugabschnitt S2 bereitgestellten Unterdruck wird die Dichtlippe 24 gegen das Produkt 12 gesaugt, sodass auch Produktunebenheiten ausgeglichen werden.

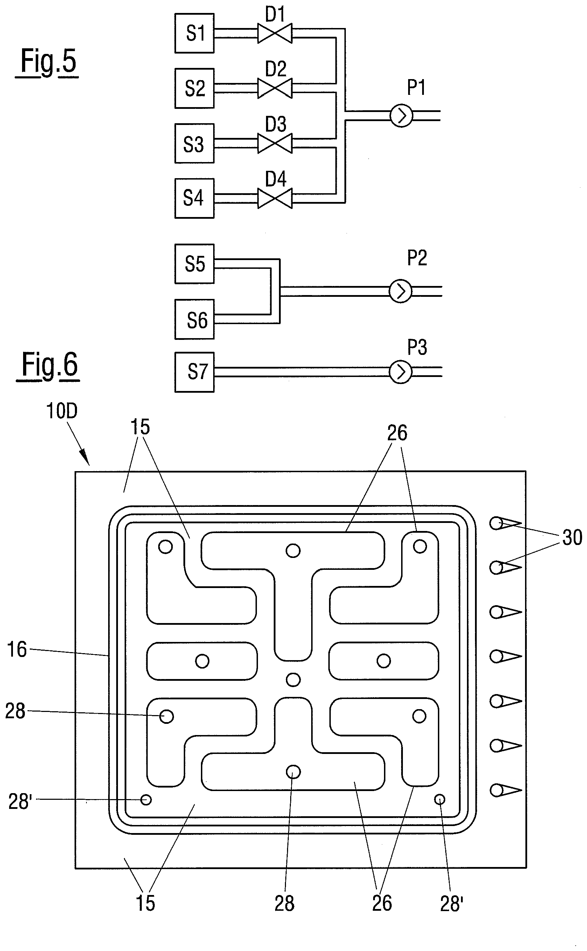

Figur 5 verdeutlicht, dass die Versorgung einzelner Abschnitte der Ansaugeinrichtung 14 mit Unterdruck flexibel an die jeweils vorliegenden Anforderungen anpassbar ist (hier beispielhaft gezeigt anhand von sieben Abschnitten S1 bis S7). Natürlich ist es grundsätzlich möglich, jedem Abschnitt S1 bis S7 eine eigene Pumpeinrichtung P zuzuordnen (siehe Abschnitt S7, Pumpeinrichtung P3). In vielen Fällen ist es jedoch günstig, mehrere Abschnitte mit einer Pumpeinrichtung zu koppeln (siehe Pumpeinrichtung P2, die mit den Abschnitten S5 und S6 gekoppelt ist). Es können auch Mittel zur Erzeugung der gewünschten Unterdruckniveaus vorgesehen sein, beispielsweise Ventil- oder Drosseleinrichtungen. In Figur 5 sind die Abschnitte S1 bis S4 über Drosseln D1 bis D4 mit einer gemeinsamen Pumpeinrichtung P1 verbunden. Die Drosseln D1 bis D4 können so ausgestaltet sein, dass in jedem der Abschnitte S1 bis S4 ein spezifisches Unterdruckniveau hergestellt wird. Anstelle der Drosseln D1 bis D4 - oder zusätzlich - können (steuerbare) Ventileinrichtungen vorgesehen sein, um eine geeignete Versorgung der Abschnitte S1 bis S4 mit Unterdruck sicherzustellen. Beliebige andere Kombinationen von Pumpeinrichtungen und/oder Mitteln zur Einstellung der gewünschten Unterdruckniveaus sind bedarfsgerecht realisierbar.

Figur 6 zeigt eine Vorderansicht auf einen weiteren Greifer 10D (von dem Produkt 12 aus gesehen). Dieser weist eine Anlagefläche 15 auf, die mit einer in radialer Richtung geschlossenen Dichteinrichtung, beispielsweise mit einer Schneide 16, versehen ist. In der Auflagefläche 15 sind eine Reihe von unregelmäßig geformten Vertiefungen 26 angeordnet, deren Bodenabschnitt jeweils zumindest eine Ansaugöffnung 28 aufweist. Die Ansaugöffnungen 28 stehen mit einer oder mehreren Pumpeinrichtungen in Verbindung. Die Vertiefungen 26 bilden also jeweils einen Saugabschnitt. Die so gebildeten Saugabschnitte sind durch Wandabschnitte getrennt, deren dem Produkt 12 zugewandten Oberflächen ein Teil der Anlagefläche 15 sind. Das anliegende Produkt 12 dichtet somit im Bereich der Anlagefläche 15 die Vertiefungen 26 gegeneinander ab.

Um die Verbindung zwischen dem Greifer 10D und dem Produkt 12 noch weiter zu verbessern, sind auch in der Anlagefläche 15 an geeigneten Stellen (bei Bedarf auch radial außerhalb der Schneide 16) Ansaugöffnungen 28' vorgesehen.

Durch den an den Ansaugöffnungen 28,28' anliegenden Unterdruck wird das Produkt 12 nicht nur in die Vertiefungen 26, sondern auch in die genannten Öffnungen 28,28' (teilweise) hineingesogen.

Eine zusätzliche Maßnahme zur Verbesserung der Greifwirkung des Greifer 10D sind schräg stehende Spitzen 30, die bei einem Kontakt des Greifers 10D mit dem Produkt 12 in letzteres mechanisch eingreifen. Die Spitzen 30 sind bevorzugt auf der Seite des Greifers 10D angeordnet, von der ein Schneidmesser in das Produkt 12 eindringt. Die dabei auftretenden Querkräfte drücken das Produkt 12 zusätzlich in die schräg stehenden Spitzen 30.

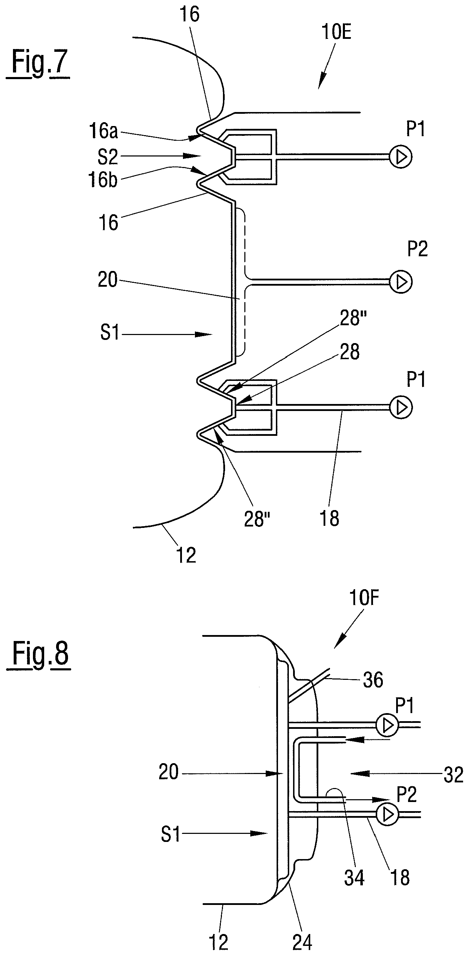

Figur 7 zeigt einen Greifer 10E, der einen ähnlichen Aufbau aufweist wie der Greifer 10B. Anstelle der unterschiedlichen großen Schneiden 16,16' sind allerdings in etwa gleichartig geformte Schneiden 16 vorgesehen. Die Schrägen der Schneiden 16 des Greifers 10E sind weniger steil angeordnet als die der Schneiden 16,16' des Greifers 10B. Dadurch wird eine stärkere lokale Kompression des Produkts 12 bewirkt, wodurch Poren in dem Produkt 12 geschlossen werden, die zu unerwünschten Leckageströmen von Luft durch das Produkt 12 führen können. Derartige Leckageströme, die auch bei unzuverlässig abdichteten Dichteinrichtungen auftreten können, belasten die Pumpeinrichtung(en) des Greifers und/oder führen zu einer schlechteren Fixierung des Produkts.

Die Kompressionswirkung wird zusätzlich verstärkt, indem eine innen liegende Flanke 16a der äußeren Schneide 16 und eine außen liegende Flanke 16b der inneren Schneide 16 in einer Richtung zu einem Bodenabschnitt des Saugabschnitt S2 hin konvergieren. Bildlich gesprochen wird das Produkt 12 in einen Konus hineingesogen, wodurch es verdichtet wird.

Die Flanken 16a,16b sind zudem mit Ansaugöffnungen 28" versehen, um das Produkt 12 nicht nur lokal zu komprimieren, sondern es auch gegen die Flanken 16a, 16b zu saugen und so die Dichtwirkung der Schneiden 16 weiter zu verbessern.

Figur 8 zeigt einen Greifer 10F mit einem Saugabschnitt S1, dessen Saugraum 20 in radialer Richtung durch eine dicht an dem Produkt 12 anliegende Dichtlippe 24 gegenüber der Umgebung abgedichtet ist. Der Saugraum 20 ist durch Pumpeinrichtungen P1, P2 evakuierbar. Ferner ist eine Kühleinrichtung 32 vorgesehen, mit der der Greifer 10F abschnittsweise kühlbar ist. Die Kühleinrichtung 32 weist zumindest einen Kühlmittelkanal 34 auf, durch den ein geeignetes Kühlmittel - zum Beispiel flüssiger Stickstoff, Sole, unterkühlte Druckluft - geleitet werden kann. Dadurch kann eine lokale Vereisung des Produkts 12 mit dem Greifer 10F bewirkt werden, die die Fixierung des Produkts 12 unterstützt (insbesondere auf einer Schneidmessereintrittsseite des Produkts 12). Durch den Unterdruck in dem Saugraum 20 wird eventuell in dem Produkt 12 enthaltenes Wasser zumindest zum Teil aus dem Produkt 12 gesogen und steht für eine Vereisung zur Verfügung, mit der das Produkt 12 und der Greifer 10F zusätzlich miteinander gekoppelt werden. Alternativ oder zusätzlich kann aber auch die Einspritzung von Wasser in den Saugraum 20 vorgesehen sein. Zu diesem Zweck weist der Greifer 10F eine Injektionsöffnung 36 auf. Durch die Injektionsöffnung 36 kann aber auch ein Kühlmittel in den Saugraum 20 eingebracht werden, um diesen zu kühlen. Beispielsweise wird zunächst kalter Stickstoff in den Saugraum 20 eingeblasen ,um mit diesen und das Produkt 12 vorzukühlen. Anschließend werden durch die Injektionsöffnung 36 Wasser eingebracht und gleichzeitig ein Unterdruck in dem Saugraum 20 erzeugt. Der Unterdruck sorgt u.a. für eine verbesserte Verteilung des Wassers im Saugraum 20, das aufgrund der Vorkühlung rasch gefriert. Die so erzeugte Vereisung wird durch die Kühleinrichtung 32 aufrechterhalten. Es versteht sich, dass in Abhängigkeit der Eigenschaften des zu haltenden Produkts 12 und aufgrund anderer Anforderungen die verschiedensten Variationen des Vorgehens zur Erzeugung einer Vereisung (zum Beispiel verschiedene Kühlmittel-Wasser-Injektionszyklen) denkbar sind.

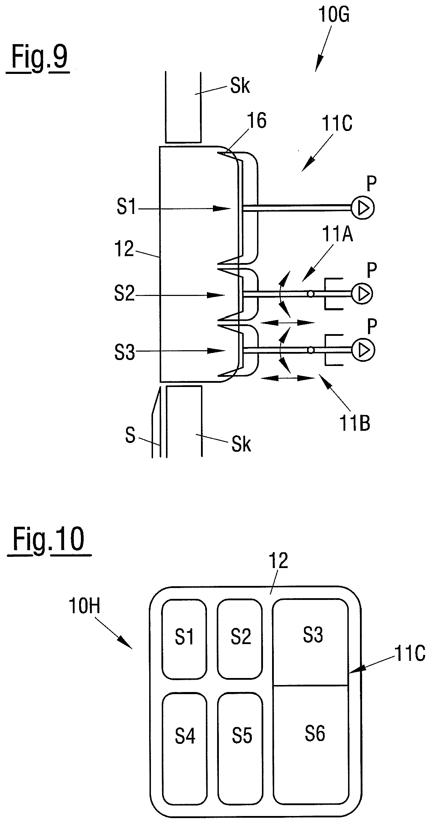

Figur 9 zeigt einen Greifer 10G mit drei Saugabschnitten S1, S2, S3, die in radialer Richtung jeweils durch eine Schneide 16 begrenzt sind. Die Saugabschnitt S2 und S3 sind Greiferabschnitten 11A,11B zugeordnet, die seitlich beweglich angeordnet sind. Auch eine gewisse axiale Beweglichkeit wird durch entsprechende Einrichtungen alternativ oder ergänzend zugelassen. Die Beweglichkeit der Greiferabschnitte 11A, 11B kompensiert Erschütterungen, die durch ein Eintreten des Schneidmessers S in das Produkt 12 ausgelöst werden. Dadurch wird vermieden, dass Undichtigkeiten im Bereich der Saugabschnitte S2, S3 auftreten. Der Greiferabschnitt 11C ist dahingegen im Wesentlichen zumindest hinsichtlich seitlicher Bewegungen fest angeordnet (ein Vorschub des Produkts 12 soll natürlich trotzdem möglich sein).

Die seitliche Beweglichkeit der Abschnitte 11A,11B kann beispielsweise durch gelenkige und/oder elastische Komponenten bereitgestellt werden. Bevorzugt lässt sich die Beweglichkeit der Abschnitte 11A,11B gezielt verändern, um in den verschiedenen Phasen des Ergreifens und des Schneidens des Produkts 12 jeweils angepasste Greifereigenschaften erzeugen zu können.

Figur 10 zeigt einen Greifer 10H mit mehreren Saugabschnitten S1 bis S6 in einer Vorderansicht, wobei die Saugabschnitte S3 und S6 an einem gemeinsamen Greiferabschnitt 11C angeordnet sind, der wie der Greiferabschnitt 11C des Greifers 10G hinsichtlich seitlicher Bewegungen im Wesentlichen insensitiv ist. Die den Saugabschnitten S1, S2, S4, S5 zugeordneten Greiferabschnitte 11A,11B lassen seitliche Bewegungen zu. Das gezeigte Beispiel soll demonstrieren, dass verschiedene Saugabschnitte beliebig zu Gruppen zusammengefasst werden können, die hinsichtlich einer seitlichen Beweglichkeit unterschiedliche Eigenschaften aufweisen.

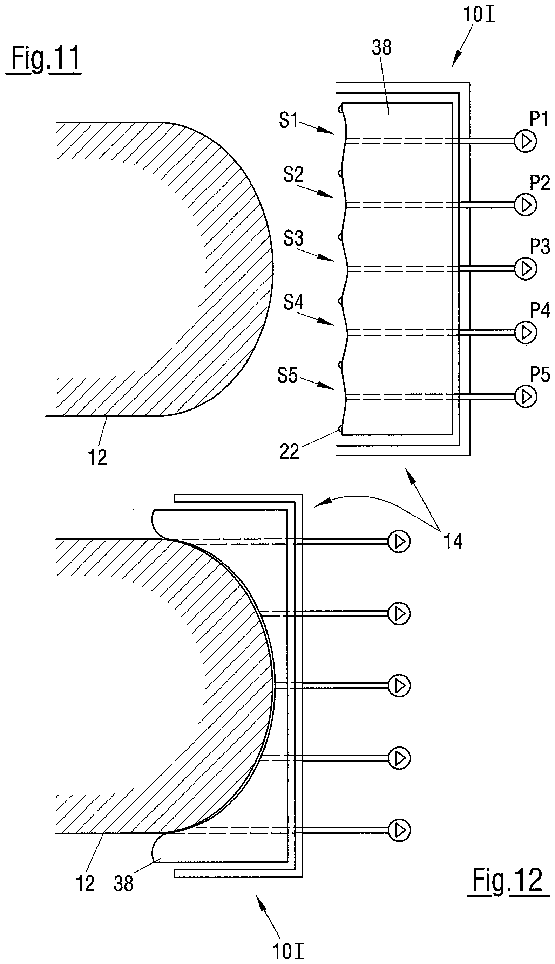

Die Figuren 11 und 12 zeigen einen Greifer 10I, der eine Ansaugeinrichtung 14 aufweist, die sich an die Oberflächengeometrie des Produkts 12 anpassen kann. Die Ansaugeinrichtung 14 weist ein verformbares Element 38 auf, dessen dem Produkt 12 zugewandte Seite durch Wülste 22 in mehrere Saugabschnitte S1 bis S5 unterteilt ist (natürlich können auch andere Dichteinrichtungen zum Einsatz gelangen). Die Saugabschnitte S1 bis S5 stehen wiederum mit geeigneten Pumpeinrichtungen P1 bis P5 in Verbindung (es versteht sich, dass nicht zwingend separate Pumpeinrichtungen vorgesehen sein müssen, vergleiche insbesondere die Ausführungen zu Figur 5).

Um das Produkt 12 zu ergreifen, wird die Ansaugeinrichtung 14 gegen das Produkt 12 gedrückt, wobei sich das verformbare Element 38 an die Geometrie des Produkts 12 anpasst (siehe Figur 12). Dabei legt es sich an dessen Oberfläche an, wodurch eine gute Abdichtung der Saugabschnitte S1 bis S5 erreicht wird. Das verformbare Element 38 kann elastisch sein. Es ist aber auch möglich, durch eine geeignete Integration elektro- oder magnetorheologischer Komponenten für eine Fixierung der Form der Ansaugeinrichtung 14 zu sorgen. Das verformbare Element 38 kann beispielsweise auch eine Flüssigkeit enthalten, die durch eine geeignete Kühlung ihren Aggregatszustand ändert, wodurch die durch das Anpressen erhaltene Form fixiert wird. Abweichend von der dargestellten Ausgestaltung kann das verformbare Element 38 beispielsweise auch nur in einem Randbereich der Ansaugeinrichtung 14 vorgesehen sein, um eine zumindest abschnittsweise Anpassung der dem Produkt 12 zugewandten Oberfläche zu ermöglichen.

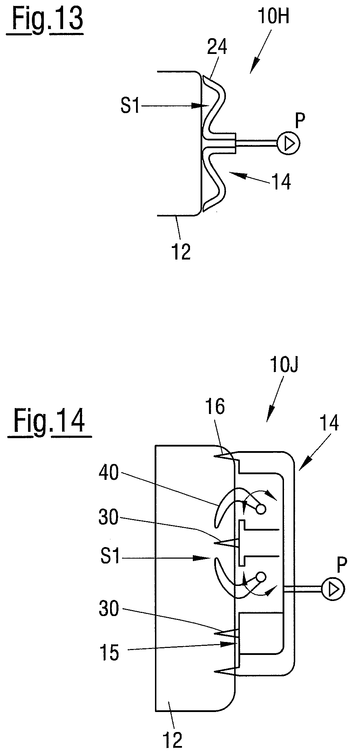

Figur 13 zeigt einen Greifer 10H mit einer Ansaugeinrichtung 14, deren Außenrand mit einer Dichtlippe 24 versehen ist, um einen Saugraum S1 zu definieren. Die Ansaugeinrichtung 14 kann teilweise elastisch ausgebildet sein, um sich an die Oberfläche des Produkts 12 anschmiegen zu können.

Figur 14 zeigt einen Greifer 10J mit einer Ansaugeinrichtung 14, die einen Saugabschnitt S1 aufweist. Die Ansaugeinrichtung 14 liegt mit ihrer Anlagefläche 15 an dem Produkt 12 an. Die Anlagefläche 15 ist zur Verbesserung der Fixierung des Produkts 12 mit Spitzen 30 versehen. In radialer Richtung ist der Saugabschnitt 16 durch eine Schneide 16 begrenzt. In bestimmten Fällen kann es vorteilhaft sein, zusätzlich zu der fixierenden Wirkung, die durch die Ansaugeinrichtung 14 bereitgestellt wird, mechanische Fixiermittel vorzusehen. Im vorliegenden Beispiel sind dies selektiv verschwenkbare Krallen 40. Sie greifen im Bereich des Saugabschnitts S1 in das Produkt 12 ein.

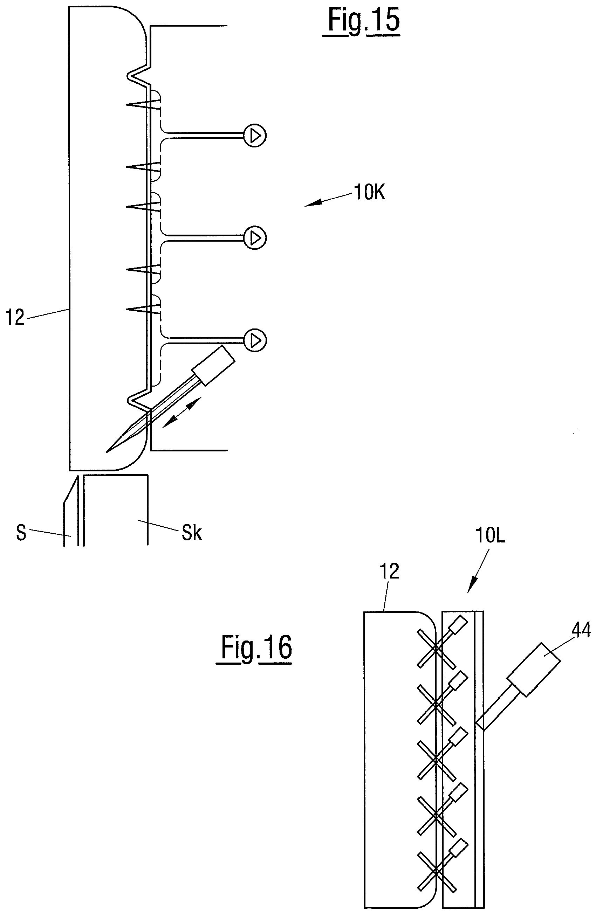

Figur 15 zeigt einen Greifer 10K, der an seiner, dem Schneidmesser S zugewandten Seite einen schräg in das Produkt 12 einführbaren Haken 42 aufweist. Durch die beim Schneiden auftretenden Querkräfte, die vorstehend bereits mehrfach diskutiert wurden, wird das Produkt 12 in den Haken 42 hineingedrückt, wodurch sich die Fixierung des Produkts 12 an dem Greifer 10K verbessert. Der Haken 42 kann auch als Spitze oder Stachel ausgebildet sein. Insbesondere ist eine Mehrzahl derartiger Elemente 42 vorgesehen, die beispielsweise in einer Reihe angeordnet sind (wie etwa die Spitzen 30 in Figur 6).

Figur 16 zeigt einen Greifer 10L, der eine Mehrzahl von Elementen 42 aufweist, die alternierend schräg in das Produkt 12 eingreifen, um eine besonders gute Fixierung des Produkts 12 zu erreichen. Zur Aktuierung der Elemente 42 kann beispielsweise ein pneumatischer Zylinder 44 bereitgestellt werden. Alternative Aktivierungsmechanismen (elektrisch, hydraulisch, mechanisch,...) sind ebenfalls denkbar.

Die vorstehend beschriebenen konstruktiven oder verfahrenstechnischen Maßnahmen zur Verbesserung der Abdichtung der Ansaugeinrichtung 14 können beliebig kombiniert werden, um den für die jeweils vorliegende Anforderung geeigneten Greifer bzw. ein optimiertes Greif-/Schneideverfahren zu schaffen. So ist es durchaus möglich, das Konzept mehrerer unabhängiger Saugabschnitte mit zusätzlichen Fixierungsmaßnahmen (mechanisch mit dem Produkt in Eingriff bringbare Elemente, (lokale) Vereisung etc.) zu kombinieren. Eine seitlich bewegliche Anordnung des Greifers bzw. einzelner Abschnitte des Greifers ist ebenfalls ohne weiteres in die beschriebenen Ausführungsformen integrierbar. Ein besonderes Augenmerk liegt dabei auf der Schneidmessereintrittsseite des zu schneidenden Produkts, da hier die größten Querkräfte auftreten.

Bei der Ausgestaltung des erfindungsgemäßen Greifers wird insbesondere Wert auf eine hygienegerechte Gestaltung und gute Reinigungsfähigkeit gelegt. Teile des Greifers, insbesondere die Ansaugeinrichtung bzw. deren Komponenten, sind einfach lösbar gestaltet. Dies erleichtert auch eine optische Kontrolle der wesentlichen Baugruppen des Greifers, vor allem auf der Ansaugseite.

### Bezugszeichenliste

- 10A bis 10L: Greifer
- 12: Produkt
- 14: Ansaugeinrichtung
- 15: Anlagefläche
- 16,16': Schneide
- 16a,16b: Schneidenflanke
- 18: Saugkanal
- 20: Saugraum
- 22: Wulst
- 24: Dichtlippe
- 26: Vertiefung
- 28,28',28": Ansaugöffnung
- 30: Spitze
- 32: Kühleinrichtung
- 34: Kühlmittelkanal
- 36: Injektionsöffnung
- 38: verformbares Element
- 40: Kralle
- 42: Haken
- 44: pneumatischer Zylinder

- S1 bis S11: Saugabschnitt
- SK: Schneidkante
- S: Schneidmesser
- A-A: Schnittebene
- P1 bis P4: Pumpeinrichtung
- D1 bis D4: Drossel

## Patentansprüche

1. Greifer zum Ergreifen eines Produkts, insbesondere eines Lebensmittelprodukts, mit einer Ansaugeinrichtung, die eine Anlagefläche (15) aufweist, die mit einem Abschnitt, insbesondere Endabschnitt des Produkts (12) in Kontakt bringbar ist, wobei die Ansaugeinrichtung zumindest einen Saugabschnitt aufweist, der in radialer Richtung von einer Dichteinrichtung (16) begrenzt ist und der mit einer Unterdruck erzeugenden Pumpeinrichtung (P, P1... P4) in Verbindung steht, wobei der Saugabschnitt durch zumindest einen Wandabschnitt in zumindest zwei Segmente aufgeteilt ist, die als Vertiefungen (26) in der Anlagefläche ausgestaltet sind, wobei eine dem Produkt zugewandte Oberfläche des Wandabschnitts einen Teil der Anlagefläche bildet und wobei ein Bodenabschnitt der Vertiefungen und die Anlagefläche zumindest eine Ansaugöffnung (28 bzw. 28') aufweisen, die mit der Pumpeinrichtung in Verbindung stehen.

2. Greifer nach Anspruch 1,
**dadurch gekennzeichnet, dass**
die Dichteinrichtung zumindest abschnittsweise als Schneide (16) ausgestaltet ist und/oder zumindest abschnittsweise als Wulst oder Dichtlippe ausgestaltet ist.

3. Greifer nach zumindest einem der vorstehenden Ansprüche,
**dadurch gekennzeichnet , dass**
die Dichteinrichtung (16) derart geformt ist, dass eine lokale Kompression des mit der Dichteinrichtung in Kontakt bringbaren Produkts (12) erzeugbar ist, insbesondere wobei die Dichteinrichtung zumindest abschnittsweise keilförmig ausgebildet sind.

4. Greifer nach zumindest einem der vorstehenden Ansprüche,
**dadurch gekennzeichnet , dass**
die Oberfläche des einen Teils der Anlagefläche (15) bildenden Wandabschnitts mit einer Dichteinrichtung, Krallen und/oder Spitzen (30) versehen ist.

5. Greifer nach zumindest einem der vorstehenden Ansprüche,
**dadurch gekennzeichnet , dass**
mehrere Saugabschnitte vorgesehen sind.

6. Greifer nach zumindest einem der vorstehenden Ansprüche,
**dadurch gekennzeichnet , dass**
die Saugabschnitte und/oder Dichtabschnitte in einer Draufsicht auf die Ansaugeinrichtung unsymmetrisch geformt und/oder verteilt sind.

7. Greifer nach zumindest einem der vorstehenden Ansprüche,
**dadurch gekennzeichnet , dass**
die Pumpeinrichtung mehrere separate Pumpeinheiten (P, P1 ... P4) umfasst und/oder ein Mittel zur Einstellung vorgebbarer Unterdruckniveaus in verschiedenen Abschnitten der Ansaugeinrichtung vorgesehen ist.

8. Greifer nach zumindest einem der vorstehenden Ansprüche 3, 5 oder 6, **dadurch gekennzeichnet , dass**
die Ansaugöffnungen (28, 28') mit einer oder mehreren Pumpeinrichtungen (P, P1...P4) in Verbindung stehen.

9. Schneidvorrichtung zum Schneiden eines Produkts, insbesondere eines Lebensmittelprodukts, mit einer Produktaufnahme zur Aufnahme des Produkts, mit einer Vorschubvorrichtung zum Vorschub des Produkts (12) in einer Richtung im Wesentlichen senkrecht zu einer durch ein Schneidmesser (S) und eine Schneidkante (Sk) definierten Schnittebene (A-A) und mit einem Greifer (10D) gemäß zumindest einem der vorstehenden Ansprüche.

## Claims

1. A gripper for gripping a product, in particular a food product, having a suction device which has a contact surface (15) which can be brought into contact with a section, in particular the end section of the product (12), wherein the suction device has at least one suction section which is bounded in the radial direction by a sealing device (16) and which is in communication with a pumping device (P, P1... P4) generating a vacuum, wherein
the suction section is divided into at least two segments, which are designed as recesses (26) in the contact surface, by at least one wall section, wherein a surface of the wall section facing the product forms a part of the contact surface, and wherein a base section of the recesses and the contact surface have at least one suction opening (28 or 28'), which suction openings are in communication with the pumping device.

2. A gripper according to claim 1,
**characterized in that**
the sealing device is at least sectionally designed as a blade edge (16) and/or is at least sectionally designed as a bead or as a sealing lip.

3. A gripper according to at least one of the preceding claims,
**characterized in that**
the sealing device (16) is shaped such that a local compression of the product (12) which can be brought into contact with the sealing device can be generated, in particular with the sealing device at least sectionally being wedge-shaped.

4. A gripper according to at least one of the preceding claims,
**characterized in that**
the surface of the wall section forming a part of the contact surface (15) is provided with a sealing device, claws and/or tips (30).

5. A gripper according to at least one of the preceding claims,
**characterized in that**
a plurality of suction sections are provided.

6. A gripper according to at least one of the preceding claims,
**characterized in that**
the suction sections and/or sealing sections are shaped and/or distributed asymmetrically in a plan view of the suction device.

7. A gripper according to at least one of the preceding claims,
**characterized in that**
the pumping device comprises a plurality of separate pumping units (P, P1... P4) and/or a means for setting predefinable vacuum levels in different sections of the suction device.

8. A gripper according to at least one of the preceding claims 3, 5 or 6,
**characterized in that**
the suction openings (28, 28') are in communication with one or more pumping devices (P, P1... P4).

9. A cutting apparatus for cutting a product, in particular a food product, comprising a product receiver for receiving the product; a feeding apparatus for feeding the product (12) in a direction substantially perpendicular to a cutting plane (A-A) defined by a cutting blade (S) and by a cutting edge (Sk); and a gripper (10D) according to at least one of the preceding claims.

## Revendications

1. Préhenseur pour saisir un produit, en particulier un produit alimentaire, comprenant un dispositif d'aspiration muni d'une surface d'appui (15) qui peut être mise en contact avec une portion, en particulier une portion d'extrémité du produit (12), le dispositif d'aspiration présentant au moins une section d'aspiration qui est délimitée dans la direction radiale par un dispositif d'étanchéité (16) et qui est en communication avec un dispositif de pompage (P, P1 ... P4) générant une dépression,
dans lequel la section d'aspiration est subdivisée par au moins une section de paroi en au moins deux segments réalisés en forme de renfoncements (26) dans la surface d'appui,
une surface de la section de paroi tournée vers le produit constitue une partie de la surface d'appui, et une section de fond des renfoncements et la surface d'appui présentent au moins une ouverture d'aspiration (28 ou 28') communiquant avec le dispositif de pompage.

2. Préhenseur selon la revendication 1,
**caractérisé en ce que**
le dispositif d'étanchéité est conçu au moins localement sous forme de tranchant (16) et/ou est conçu au moins localement sous forme de bourrelet ou de lèvre d'étanchéité.

3. Préhenseur selon l'une au moins des revendications précédentes,
**caractérisé en ce que**
le dispositif d'étanchéité (16) est formé de manière à permettre de générer une compression locale du produit (12) susceptible d'être mis en contact avec le dispositif d'étanchéité, en particulier le dispositif d'étanchéité étant réalisé au moins localement en forme de coin.

4. Préhenseur selon l'une au moins des revendications précédentes,
**caractérisé en ce que**
la surface de la section de paroi constituant une partie de la surface d'appui (15) est pourvue d'un dispositif d'étanchéité, de griffes et/ou de pointes (30).

5. Préhenseur selon l'une au moins des revendications précédentes,
**caractérisé en ce que**
il est prévu plusieurs sections d'aspiration.

6. Préhenseur selon l'une au moins des revendications précédentes,
**caractérisé en ce que**
les sections d'aspiration et/ou les sections d'étanchéité sont formées et/ou réparties de manière asymétrique dans une vue en plan du dispositif d'aspiration.

7. Préhenseur selon l'une au moins des revendications précédentes,
**caractérisé en ce que**
le dispositif de pompage comprend plusieurs unités de pompage (P, P1 ... P4) séparées, et/ou il est prévu un moyen de réglage de niveaux de dépression prédéfinissables dans différentes sections du dispositif d'aspiration.

8. Préhenseur selon l'une au moins des revendications précédentes 3, 5 ou 6,
**caractérisé en ce que**
les ouvertures d'aspiration (28, 28') sont en communication avec un ou plusieurs dispositifs de pompage (P, P1 ... P4).

9. Dispositif de coupe pour couper un produit, en particulier un produit alimentaire, comprenant un réceptacle de produit pour recevoir le produit, un dispositif d'avance pour faire avancer le produit (12) dans une direction sensiblement perpendiculaire à un plan de coupe (A-A) défini par une lame de coupe (S) et par une arête de coupe (Sk), et un préhenseur (10D) selon l'une au moins des revendications précédentes.
